**Europäisches Patentamt**

**European Patent Office**

**Office européen des brevets**

(11) Veröffentlichungsnummer: **0 329 095**

**A1**

(12) ## EUROPÄISCHE PATENTANMELDUNG

(21) Anmeldenummer: **89102556.1**

(22) Anmeldetag: **15.02.89**

(51) Int. Cl.⁴: **A01C 7/04**

(30) Priorität: **19.02.88 DE 8802181 U**

(43) Veröffentlichungstag der Anmeldung:
**23.08.89 Patentblatt 89/34**

(84) Benannte Vertragsstaaten:
**DE FR GB IT**

(71) Anmelder: **Maschinenbau Harsewinkel,
Gugenhan GmbH & Co. KG
Brockhägerstrasse 81
D-4834 Harsewinkel 1(DE)**

(72) Erfinder: **Gugenhan, Heinrich
Am Kirchendriesch 43
D-5160 Düren(DE)**

(54) **Einzelkornsämaschine.**

(57) Die Erfindung bezieht sich auf eine pneumatische Einzelkornsämaschine mit einer Lochscheibe und einem mit der Lochscheibe umlaufenden, lippenförmigen Absperrelement, das angedrückt, Sauglöcher versperrt und dadurch Saatgut, das teilweise in die Sauglöcher ragt, nicht beschädigt, sondern aus dem Saugloch drückt.

Fig. 1

EP 0 329 095 A1

# Einzelkornsämaschine

Die Erfindung betrifft eine Einzelkornsämaschine mit einer mit einem Rotationsantrieb gekoppelten Lochscheibe, die auf einem Lochkreis angeordnete Sauglöcher zum Mitnehmen von Saatkörnern aufweist und einen Raum geringeren Drucks gegenüber einem die zu vereinzelnden Saatkörner enthaltenden Raum höheren Drucks trennt, wobei auf der Seite des geringeren Drucks in der Abwurfposition der Saatkörner ein Sperrelement mit der Lochscheibe zusammenarbeitet und die an ihm vorbeibewegten Sauglöcher kurzzeitig absperrt.

Es ist bereits bekannt, bei derartigen Einzelkornsämaschinen Sperrelemente zu verwenden, die unmittelbar auf der Unterdruckseite der Lochscheibe angreifen und dabei die vorbeibewegten Sauglöcher kurzzeitig absperren und damit die Wirkung des Unterdrucks auf das auf der anderen Seite der Lochscheibe an dem betreffenden Saugloch gehaltene Saatkorn unterbrechen.

Bei diesen bekannten Vorrichtungen treten stets mehr oder weniger hohe Verschleißerscheinungen auf, die nach einer gewissen Betriebszeit ein Austauschen des Sperrelements erfordern. Überdies kann das Arbeiten dieser bekannten Vorrichtungen dann nicht befriedigen, wenn mit hohen Sägeschwindigkeiten und folglich hohen Drehzahlen der Lochscheibe gearbeitet werden soll. In solchen Fällen kann die mit den bekannten Sperrelementen erreichte Absperrzeit zu kurz bemessen sein.

Ferner kann auch der für die bekannten Sperrelemente erforderliche, relativ hohe Raumbedarf als nachteilig empfunden werden.

Die bekannten mechanischen, ortsfest gefedert gelagerten Sperrelemente bergen die Gefahr in sich, daß in das Saugloch hineinragende Keime oder Saatkornspitzen abgeschert oder verletzt werden.

Die Aufgabe der vorliegenden Erfindung besteht nun darin, insbesondere die Nachteile der bekannten Sperrelemente bei Einzelkornsämaschinen der eingangs erwähnten Art zu vermeiden und eine Einzelkornsämaschine zu schaffen, bei der der Verschleiß des Sperrelements stark reduziert, die Absperrwirkung erhöht und der Absperrbereich ohne weiteres so lang wie erforderlich bemessen werden kann, ohne daß Keime oder in das Saugloch ragende Saatkornspitzen verletzt werden.

Diese Aufgabe wird erfindungsgemäß bei einer Einzelkornsämaschine der eingangs erwähnten Art dadurch gelöst, daß das Sperrelement scheibenförmig ausgebildet ist, mit der Lochscheibe verbunden ist, aus elastischem, dichtem Material besteht, die Sauglöcher übergreift und in Richtung weg von der Lochscheibe elastisch vorgespannt ist und daß in der Abwurfposition ein Druckelement vorgesehen ist, welches das Sperrelement in der Bewegungsbahn der Sauglöcher gegen die Lochscheibe preßt.

Das Sperrelement befindet sich dabei im Bereich der Sauglöcher mit Abstand vor diesen, während es lediglich an der Abwurfstelle an die Lochscheibe gepreßt wird. Die in Umfangsrichtung gemessene Länge dieses Anpreßbereichs kann dabei weitgehend beliebig gestaltet und den jeweiligen Erfordernissen angepaßt werden.

Das Angreifen dieses Sperrelements an den Sauglöchern und an den darin eingreifenden Saatkörnern erfolgt sanft und schonend, so daß Beschädigungen der Saatkörner nicht zu befürchten sind. Dieser schonende Angriff erlaubt dennoch aufgrund der in Umfangsrichtung gemessenen Länge des Angriffsbereichs ein sicheres Abwerfen der Saatkörner.

Für das Sperrelement kommen viele elastische Materialien in Betracht, z. B. auch Weichgummi. Bei Verwendung solcher Mate rialien dringt das Sperrelement in die Sauglöcher ein und reinigt diese.

Die erfindungsgemäße Einzelkornsämaschine kann ferner so ausgebildet sein, daß das Sperrelement ringförmig ausgebildet und radial außerhalb oder radial innerhalb der Sauglöcher mit der Lochscheibe verbunden ist. Dabei stellt sich das Sperrelement als ein ringförmig verlaufender Streifen dar, der auf der Lochscheibe befestigt ist und den mit Sauglöchern versehenen Bereich dieser Scheibe übergreift.

Die erfindungsgemäße Einzelkornsämaschine kann ferner so ausgebildet sein, daß das Druckelement federnd abgestützt ist. Somit wird ein sanftes Angreifen des Sperrelements an der Lochscheibe gefördert und Verschleiß reduziert.

Die erfindungsgemäße Einzelkornsämaschine kann ferner so ausgebildet sein, daß das Druckelement von mindestens einer um eine radial verlaufende Achse drehbaren Rolle gebildet ist. Insbesondere durch die Verwendung von zwei in Umfangsrichtung aufeinander folgenden Rollen kann somit ein Anpreßbereich für das Sperrelement definiert werden, welcher die erforderliche Umfangserstreckung hat.

Die erfindungsgemäße Einzelkornsämaschine kann ferner so ausgebildet sein, daß das Sperrelement sowie das Druckelement in einer mittels der Lochscheibe geschlossenen Unterdrucktrommel angeordnet sind, wobei das Druckelement über einen Arm an einem feststehenden Nabenteil abgestützt ist. Dabei ergeben sich insbesondere Vorteile hinsichtlich der Ausgestaltung und Abdichtung des Unterdruckraums der Maschine.

Die erfindungsgemäße Einzelkornsämaschine kann ferner so ausgebildet sein, daß das Sperrelement aus mehreren Segmenten gebildet ist. Auf diese Weise kann das Ansetzen von Beizstaub und dgl. an dem Sperrelement verhindert werden.

Schließlich kann die erfindungsgemäße Einzelkornsämaschine so ausgebildet sein, daß das Sperrelement in den Bereichen zwischen den Sauglöchern Durchbrüche aufweist. Auch bei dieser Ausführung ist die Möglichkeit gegeben, daß vorhandener Beizstaub oder dgl. den Bereich zwischen Sauglöchern und Sperrelement in einfacher Weise verlassen kann.

Im folgenden Teil der Beschreibung wird eine Ausführungsform der erfindungsgemäßen Einzelkornsämaschine anhand von Zeichnungen beschrieben. Es zeigt:

Fig. 1 einen Axialschnitt durch einen Teil einer erfindungsgemäßen Einzelkornsämaschine, an deren Lochscheibe auf der Seite des geringeren Drucks ein ringförmiges Sperrelement angeordnet ist, und

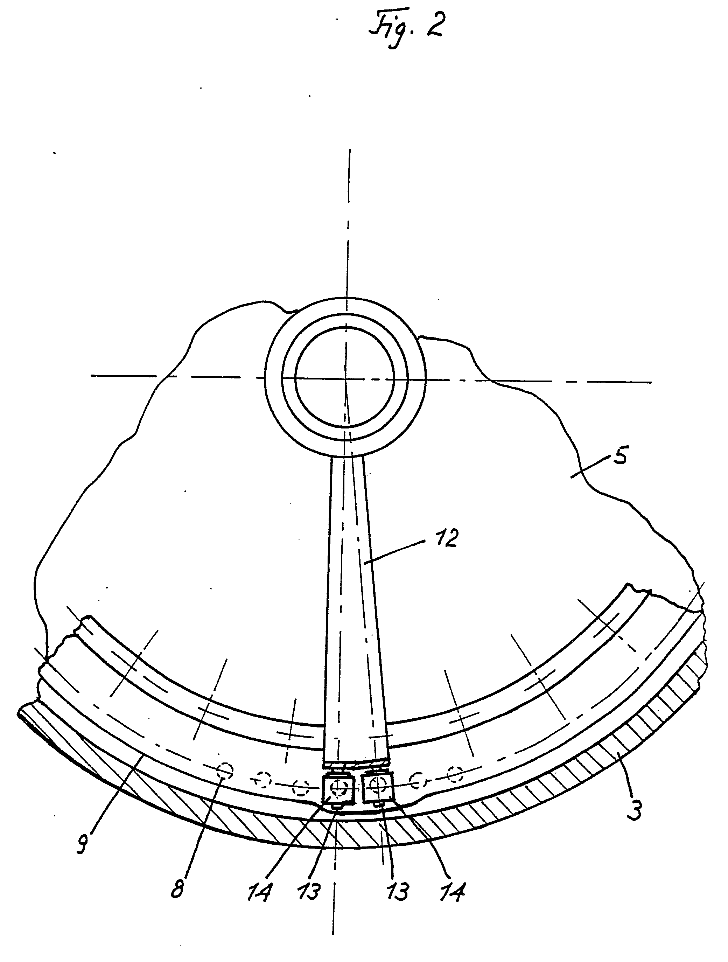

Fig. 2 einen Teilschnitt nach der Linie II-II in Fig. 1.

In den Figuren ist von einer Einzelkornsämaschine ein feststehender Nabenteil 1 dargestellt, auf dem eine Nabe 2 eines Trommelgehäuses 3 drehbar gelagert ist. Auf der Nabe 2 sitzt ein Kettenrad 4 für einen Kettenantrieb zur Drehung des Trommelgehäuses 3. Das Trommelgehäuse 3 ist mittels einer Lochscheibe 5 geschlossen, so daß ein Trommelraum 6 von dem Trommelgehäuse 3 und der Lochscheibe 5 begrenzt ist. Dieser Trommelraum 6 ist über eine Bohrung 7 des Nabenteils 1 an eine nicht dargestellte Unterdruckquelle angeschlossen.

In der Lochscheibe 5 sind auf einem Teilkreis äquidistant Sauglöcher 8 vorgesehen, deren Durchmesser kleiner ist als der kleinste Durchmesser der jeweils zu säenden Saatkörner. Die Lochscheibe 5 ist lösbar mit dem Trommelgehäuse 3 verbunden.

Auf der Lochscheibe 5 ist ein ringförmiges flaches Sperrelement 9 mittels Schrauben 10 im Innern der Trommel festgelegt. Das ringförmige Sperrelement 9 ist aus elastischem Material, inbesondere Weichgummi, hergestellt und im unbelasteten Zustand von der Lochscheibe 5 weg geformt. Die Schrauben 10 liegen bezüglich der Sauglöcher 8 nach radial innen versetzt.

Auf dem in den Trommelraum 6 hineinragenden Ende des Nabenteils 1 sitzt ein Bund 11, von dem ein Arm 12 in radialer Richtung vorsteht. Dieser Arm 12 trägt an seinem Ende zwei radial gerichtete Achsen 13, auf denen Rollen 14 frei drehbar gelagert sind. Diese Rollen 14 greifen an dem Sperrelement 9 als Druckelement an und drücken das Sperrelement 9 auf die Lochscheibe 5 und schließen damit in dem beaufschlagten Bereich die Sauglöcher 8. Die in Umfangsrichtung gemessene Länge dieses Bereichs wird durch den Abstand der beiden Rollen 14 definiert. In diesem Bereich wird der Unterdruck von den Sauglöchern 8 und damit auch von den an diesen Sauglöchern 8 gehaltenen Saatkörnern abgesperrt, so daß hier die Saatkörner abfallen können.

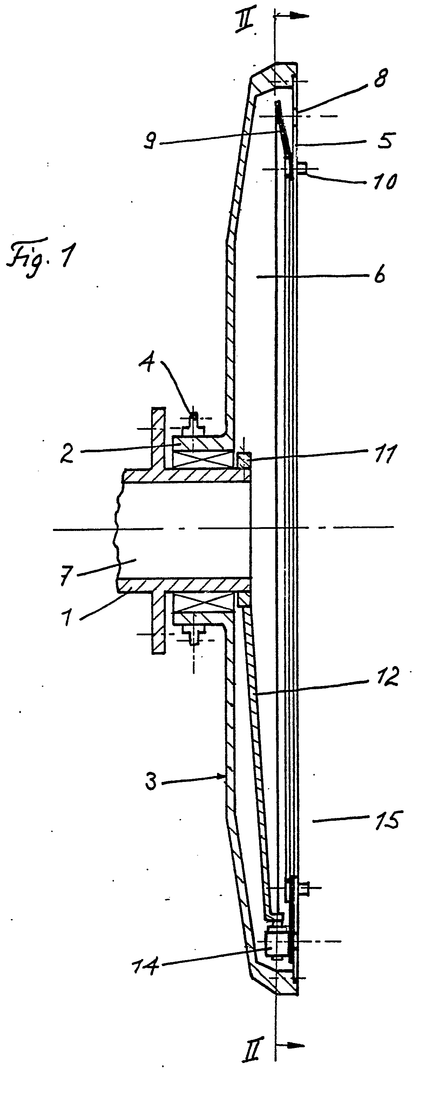

Außerhalb des Einwirkungsbereichs der Rollen 14 nimmt das Sperrelement 9 die in Fig. 1 oben dargestellte Position ein, in der es sich auf Abstand zu den Sauglöchern 8 befindet und damit den im Trommelraum 6 herrschenden Unterdruck an den Saatkörnern angreifen läßt.

Die Saatkörner werden in bekannter Weise in dem Saatgutraum 15 an die Lochscheibe 5 herangeführt. In dem Saatgutraum 15 herrscht Umgebungsdruck.

## Ansprüche

1. Einzelkornsämaschine mit einer mit einem Rotationsantrieb gekoppelten Lochscheibe, die auf einem Lochkreis angeordnete Sauglöcher zum Mitnehmen von Saatkörnern aufweist und einen Raum geringeren Drucks gegenüber einem die zu vereinzelnden Saatkörner enthaltenden Raum höheren Drucks trennt, wobei auf der Seite des geringeren Drucks in der Abwurfposition der Saatkörner ein Sperrelement mit der Lochscheibe zusammenarbeitet und die an ihm vorbeibewegten Sauglöcher kurzzeitig absperrt, **dadurch gekennzeichnet,** daß das Sperrelement (9) scheibenförmig ausgebildet ist, mit der Lochscheibe (5) verbunden ist, aus elastischem, dichtem Material besteht, die Sauglöcher (8) übergreift und in Richtung weg von der Lochscheibe (5) elastisch vorgespannt ist und daß in der Abwurfposition ein Druckelement (14) vorgesehen ist, welches das Sperrelement (9) in der Bewegungsbahn der Sauglöcher (8) gegen die Lochscheibe (5) preßt.

2. Einzelkornsämaschine nach Anspruch 1, dadurch gekennzeichnet, daß das Sperrelement (9) ringförmig ausgebildet und radial außerhalb oder radial innerhalb der Sauglöcher (8) mit der Lochscheibe (5) verbunden ist.

3. Einzelkornsämaschine nach Anspruch 1 oder 2, dadurch gekennzeichnet, daß das Druckelement (14) federnd abgestützt ist.

4. Einzelkornsämaschine nach einem der vorhergehenden Ansprüche, dadurch gekennzeichnet, daß das Druckelement (14) von mindestens einer um eine radial verlaufende Achse drehbaren Rolle (14) gebildet ist.

5. Einzelkornsämaschine nach einem der vorhergehenden Ansprüche, dadurch gekennzeichnet, daß das Sperrelement (9) sowie das Druckelement (14) in einer mittels der Lochscheibe (5) geschlossenen Unterdrucktrommel angeordnet sind, wobei das Druckelement (14) über einen Arm (12) an einem feststehenden Nabenteil (1) abgestützt ist.

6. Einzelkornsämaschine nach einem der vorhergehenden Ansprüche, dadurch gekennzeichnet, daß das Sperrelement (9) aus mehreren Segmenten gebildet ist.

7. Einzelkornsämaschine nach einem der vorhergehenden Ansprüche, dadurch gekennzeichnet, daß das Sperrelement (9) in den Bereichen zwischen den Sauglöchern (8) Durchbrüche aufweist.

Fig. 1

Fig. 2

| | Europäisches Patentamt | **EUROPÄISCHER RECHERCHENBERICHT** | Nummer der Anmeldung |
| | | | EP 89 10 2556 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | DE-A-2011462 (EBERHARDT)<br>* Seite 5, Zeile 7 - Seite 8; Figuren 1, 2, 3 *<br>--- | 1, 2, 6, 7 | A01C7/04 |
| A | FR-A-2198354 (FÄHSE & CO)<br>* Seite 7, Zeile 26 - Seite 16; Figuren 1-7 *<br>----- | 1, 3, 4, 5 | |
| | | | **RECHERCHIERTE SACHGEBIETE (Int. Cl.4 )**<br><br>A01C |

Der vorliegende Recherchenbericht wurde für alle Patentansprüche erstellt

| Recherchenort | Abschlußdatum der Recherche | Prüfer |
|---|---|---|
| DEN HAAG | 20 APRIL 1989 | VERMANDER R.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................................................
& : Mitglied der gleichen Patentfamilie, übereinstimmendes
    Dokument

EPO FORM 1503 03.82 (P0403)